# EUROPEAN PATENT APPLICATION

(11) **EP 0 686 783 A1**
(43) Date of publication of application: **13.12.1995**
(21) Application number: 95107923.5
(22) Date of filing: 23.05.1995
(51) Int. Cl.: F16C 29/02

(54) **Method of producing guide-slide assemblies, and grooved bar for implementing such a method**

(30) Priority: 24.05.1994 IT TO940424
(71) Applicant: FERRERO GIULIO S.p.A., I-10122 Torino (IT)
(72) Inventor: Cicuttini, Dario, I-10145 Torino (IT)
(74) Representative: Jorio, Paolo

(57) **Abstract**

A guide-slide assembly (1) of any length is produced by cutting a longitudinally grooved, constant-section bar (32) into a first (2a) and second (2b) portion, and mating the two portions (2a, 2b) so that a first longitudinally grooved surface (16a) of the first portion (2a) at least partly contacts a second longitudinally grooved surface (16b) of the second portion (2b); the bar (32) being so formed that the two mutually contacting longitudinally grooved surfaces (16a, 16b) present transverse profiles, of which one, at least partly, is substantially a negative of the other.

## Description

The present invention relates to a method of producing guide-slide assemblies.

An enormous number of products, devices, machines and systems are marketed featuring guide-slide assemblies, i.e. assemblies interposed between fixed and movable members, for enabling controlled displacement of the movable member in relation to the fixed member in a given direction and along a normally straight path.

Relatively recent improvements have led to the production of guide-slide assemblies wherein a first elongated element presenting a first given profile and fittable to a fixed member is connected in sliding manner, with or without the interposition of variously formed, variously retained rolling bodies, to a second element presenting a second profile differing from the first, fittable to a movable member, and forming a shoe for sliding the movable member along the first element.

Though normally satisfactory, by virtue of being designed for specific applications, known guide-slide assemblies of the aforementioned type present the drawback of being relatively expensive, due to requiring the production of at least two different elements, and due to the fact that they are normally preassembled and available in a limited number of lengths, thus seriously limiting users as regards the size of the movable and fixed members.

It is an object of the present invention to provide a method of producing guide-slide assemblies designed to overcome the aforementioned drawbacks.

According to the present invention, there is provided a method of producing guide-slide assemblies of any length, the method being characterized by comprising stages consisting in:
forming a longitudinally grooved bar of constant cross section;
cutting the bar into at least a first and a second portion; and
mating the two portions so that a first longitudinally grooved surface of the first portion at least partly contacts a second longitudinally grooved surface of the second portion;
the bar being so formed that said two mutually contacting grooved surfaces present transverse profiles, of which one, at least partly, is substantially a negative of the other.

According to a preferred embodiment of the above method, said stage for forming the grooved bar comprises a stage consisting in forming on the bar at least one grooved longitudinal lateral face; said first and second grooved surfaces forming respective transverse parts of said lateral face of the bar; and said mating stage comprising turning the two portions 180° in relation to each other about their longitudinal axis, so that said first and second grooved surfaces face opposite ways; and placing the two portions one on top of the other, so that said first and second grooved surfaces at least partly face and at least partly contact each other.

The present invention also relates to a semifinished part, in particular a bar, for implementing the above method.

According to the present invention, there is provided a grooved bar from which to produce a guide-slide assembly of any length; the bar being characterized by presenting a constant section perpendicular to its longitudinal axis; and by presenting a first and second grooved lateral surface presenting respective transverse profiles, of which one, at least partly, is substantially a negative of the other.

According to a preferred embodiment of the above bar, said first and second grooved surfaces form, longitudinally, two parts of the same grooved lateral face of the bar.

A number of non-limiting embodiments of the present invention will be described by way of example with reference to the accompanying drawings, in which:
Figure 1 shows a schematic view in perspective of the various stages in the method according to the present invention;
Figure 2 shows a partial view in perspective of a first embodiment of a guide-slide assembly producible using the method according to the present invention;
Figure 3 shows a section along line III-III in Figure 2;
Figure 4 shows an exploded section of the Figure 3 assembly;
Figure 5 shows a partial view in perspective of a second embodiment of a guide-slide assembly producible using the method according to the present invention;
Figure 6 shows a section along line VI-VI in Figure 5;
Figure 7 shows an exploded section of the Figure 6 assembly.

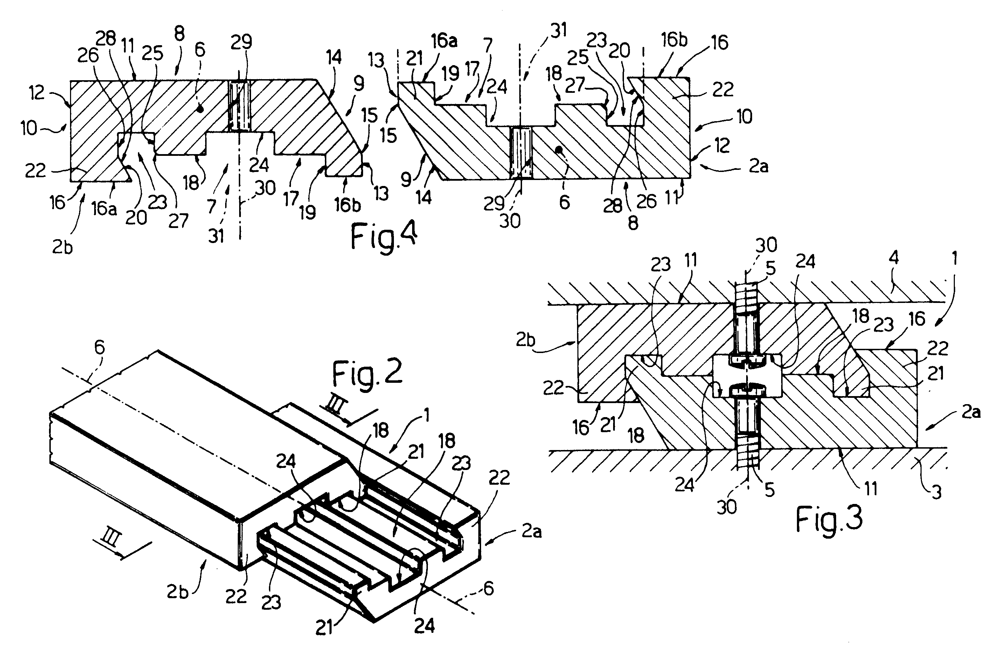

Number 1 in Figure 3 indicates a guide-slide assembly comprising two connected elements 2 with the same cross section, and which is interposed between a fixed member 3 and a movable member 4, each connected to a respective element 2 by respective screws 5.

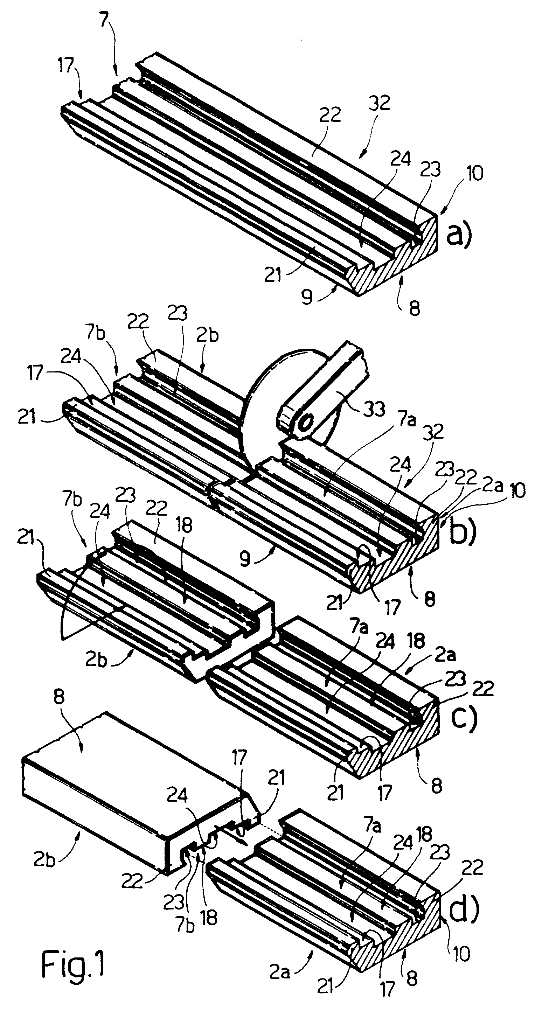

With reference to Figures 1 to 4, each element 2 presents, perpendicular to its longitudinal axis 6, a constant, substantially rectangular section, and is defined by two large lateral faces 7 and 8 substantially parallel to each other, and by two small lateral faces 9 and 10 substantially perpendicular to faces 7 and 8. In the example shown, faces 8 and 10 are flat faces defined by respective flat surfaces 11 and 12 perpendicular to each other; and face 9 is defined by two surfaces 13 and 14 joined at edge 15, and of which surface 13 is adjacent to face 7 and perpendicular to surface 11, and surface 14 is adjacent to and inclined in relation to surface 11, so that face 8 is narrower than face 7.

Finally, face 7 is a longitudinally grooved face defined by a flat surface 16 parallel to surface 11 and in which is formed an intermediate longitudinal groove 17, the bottom surface 18 of which, parallel to surface 11 and coplanar with edge 15, is a depressed pitch surface parallel to axis 6 and limited laterally by two opposite longitudinal surfaces 19 and 20, the first perpendicular to surface 18, and the second parallel to surface 14 and sloping outwards towards surface 19. Groove 17 defines, on element 2, two longitudinal ribs 21 and 22, the first defined by surfaces 13 and 19 and a portion 16a of surface 16 and presenting a substantially rectangular section, and the second defined by surfaces 12 and 20 and a portion 16b of surface 16 and presenting a substantially trapezoidal section with its longer side outwards.

In addition to surface 16 and groove 17, face 7 is also defined by a further two longitudinal, rectangular-section grooves 23 and 24 formed in surface 18. Groove 23 is formed adjacent to face 10 and defined laterally by two surfaces 25 and 26 parallel to surface 13; surface 25 being joined to surface 18 along edge 27 defining, with surface 20, the inlet 28 of groove 23; and surface 26 being adjacent to face 10 and joined to surface 20. Groove 24 is an intermediate longitudinal groove through the bottom surface of which are formed a number of through holes 29 perpendicular to surface 11 and axis 6, and each engaged by a respective screw 5.

The cross section of groove 23 is substantially a negative of that of rib 21, and inlet 28 of groove 23 is narrower than the width of rib 21 measured from edge 15 in a direction substantially perpendicular to surface 14. In other words, surface 20 defines, for groove 23, an undercut for preventing transverse insertion of a rib such as 21 inside groove 23, and for forming a substantially dove-tailed sliding connection with rib 21 when this is inserted longitudinally inside groove 23.

Groove 24 presents a plane of symmetry 30, hereinafter referred to as the "reference plane", which is perpendicular to surfaces 11 and 16, is parallel to surfaces 12 and 13, and is equidistant from surfaces 13 and 26 which define, on face 7, a portion 31 shifted laterally in relation to axis 6 and the opposite symmetrical lateral elements of which are defined by rib 21 on one side and groove 23 on the other.

As shown in Figure 1, elements 2 are formed from an intermediate semifinished part consisting of a substantially rectangular-section bar 32 defined laterally by faces 7-10, and on face 7 of which grooves 17, 23 and 24 (the latter of which may in some cases be omitted) are formed to define ribs 21 and 22, so that bar 32 presents the same cross section as elements 2.

Once formed (Figure 1a), bar 32 is cut transversely (Figure 1b) by a tool 33 into at least two portions 2a and 2b, each corresponding to an element 2 and presenting a respective grooved surface 7a, 7b corresponding to a respective portion of face 7. At this point, portions 2a and 2b are turned 180° in relation to each other about axis 6, so that surfaces 7a and 7b face opposite ways; portions 2a and 2b are shifted transversely in relation to each other into the assembly position (Figure 1d) wherein respective reference planes 30 are coplanar with each other, respective surfaces 18 are substantially coplanar with each other and facing opposite ways, and each rib 21 is therefore aligned with a respective groove 23; and, finally, portions 2a and 2b are moved axially in relation to each other into the engaged position (Figure 2) wherein each rib 21 engages a respective groove 23 in sliding manner to form guide-slide assembly 1.

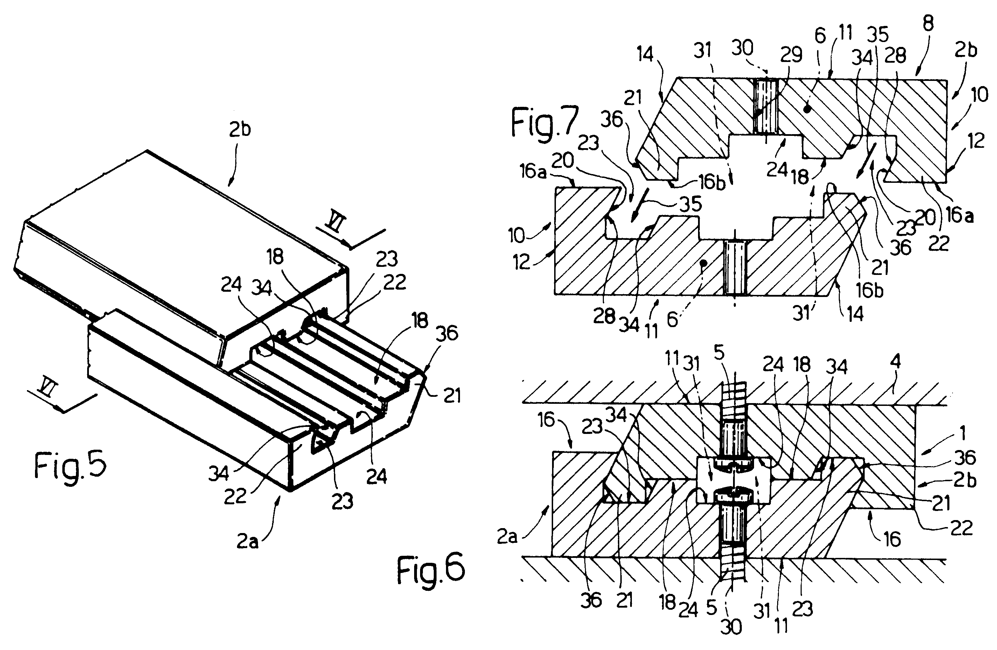

In connection with the above, it should be pointed out that the rectangular shape of rib 21 and the relatively narrow width of inlet 28, due to the undercut defined by surface 20, make it necessary for each rib 21 to be aligned with respective groove 23 for connecting portions 2a and 2b. According to the variation shown in Figures 5 to 7, however, a bevel 34, parallel to surface 20, need simply be formed at surface 25 for enabling transverse insertion of each rib 21 inside respective groove 23. More specifically, in the Figure 5-7 variation, and as shown clearly in Figure 7, after being rotated 180° in relation to each other about axis 6, portions 2a and 2b may first be positioned so that surface 14 of one is coplanar with surface 20 of the other, and then brought together in direction 35 parallel to surfaces 14 and 20 and perpendicular to respective axes 6, so that each rib 21 engages respective groove 23. Transverse insertion of each rib 21 inside respective groove 23 may be assisted by forming a bevel 36 (optional) at the edge between surfaces 13 and 16a and extended to the complete width of surface 13.

The advantages of guide-slide assembly 1 as compared with known types are as follows. Firstly, as opposed to being formed from two elements of different profiles, assembly 1 is formed from a single, relatively low-cost, straightforward grooved bar 32 made of metal, or any type of synthetic material - preferably antifriction synthetic material - or synthetic-coated metal. Secondly, assembly 1 is formed directly by the user cutting bar 32 into portions 2a, 2b of any length prior to use, thus substantially eliminating any scrap. Finally, assemblies 1 provide for solving the storage problems typically associated with currently used guide-slide assemblies.

Guide-slide assemblies such as assembly 1 described above may of course be formed from bars with a section other than that of bar 32, and in particular from bars (not shown) which, unlike bar 32, present two opposite grooved surfaces having transverse profiles, of which one, at least partly, is substantially a negative of the other, thus enabling the formation of portions (not shown) connectable in axially sliding manner.

## Claims

1. A method of producing guide-slide assemblies (1) of any length, the method being characterized by comprising stages of:
forming a longitudinally grooved bar (32) of constant cross section;
cutting the bar (32) into at least a first and a second portion (2a, 2b); and
mating the two portions (2a, 2b) so that a first longitudinally grooved surface (16a) of the first portion (2a) at least partly contacts a second longitudinally grooved surface (16b) of the second portion (2b);
the bar (32) being so formed that said two mutually contacting grooved surfaces (16a, 16b) present transverse profiles, of which one, at least partly, is substantially a negative of the other.

2. A method as claimed in Claim 1, characterized in that said stage for forming the grooved bar (32) comprises a stage of forming on the bar (32) at least one grooved longitudinal lateral face (7); said first and second grooved surfaces (16a, 16b) forming respective transverse parts of said lateral face (7) of the bar (32); and said mating stage comprising turning the two portions (2a, 2b) 180° in relation to each other about their longitudinal axis (6), so that said first and second grooved surfaces (16a, 16b) face opposite ways; and placing the two portions (2a, 2b) one on top of the other, so that said first and second grooved surfaces (16a, 16b) at least partly face and at least partly contact each other.

3. A method as claimed in Claim 2, characterized in that placing the two portions (2a, 2b) one on top of the other comprises moving one portion (2a) in relation to the other (2b) in a direction perpendicular to said longitudinal axis (6).

4. A method as claimed in any one of the foregoing Claims, characterized in that said lateral face (7) of said bar (32) is formed by first forming, on the bar (32), a depressed longitudinal lateral surface (18), so as to form, along the bar (32), at least one longitudinal rib (21) projecting in relation to the depressed surface (18); and by then forming, on said depressed surface (18), a longitudinal groove (23) having a section which is substantially a negative of that of said rib (21); said rib (21) and said groove (23) being arranged symmetrically in relation to a reference plane (30) perpendicular to said depressed surface (18).

5. A method as claimed in Claim 4, characterized in that said rib (21) and said groove (23) are so formed as to present at least one undercut (20).

6. A method as claimed in Claim 5, characterized in that said stage for placing the two portions (2a, 2b) one on top of the other comprises stages of positioning the depressed surfaces (18) of said two portions (2a, 2b) substantially coplanar with each other and facing opposite ways, and with the respective reference planes (30) coplanar with each other so that the rib (21) and groove (23) of the first portion (2a) are respectively aligned with the groove (23) and rib (21) of the second portion (2b); and in axially moving the portions (2a, 2b) in relation to each other so that the rib (21) of one engages inside the groove (23) of the other.

7. A method as claimed in Claim 5 or 6, characterized in that said rib (21) and said groove (23) are so formed as to present transverse profiles, of which one is a negative of the other with the exception of at least one bevel (34) formed on one of the two profiles.

8. A method as claimed in Claim 7, characterized in that said stage for placing the two portions (2a, 2b) one on top of the other comprises stages of positioning the depressed surfaces (18) of said two portions (2a, 2b) facing each other, with the respective reference planes (30) parallel to each other, and with the rib (21) of one substantially contacting the facing surface (16a)(16b) of the other; and in transversely moving the portions (2a, 2b) in relation to each other so that the respective reference planes (30) coincide, and the rib (21) of one engages the groove (23) of the other.

9. A method as claimed in any one of the foregoing Claims from 4 to 8, characterized in that said lateral face (7) of said bar (32) is formed by also forming, on said grooved surface (16), a further longitudinal groove (24) having its axis in said reference plane (30).

10. A grooved bar (32) from which to produce a guide-slide assembly (1) of any length; the bar (32) being characterized by presenting a constant section perpendicular to its longitudinal axis (6); and by presenting a first and second grooved lateral surface (16a, 16b) presenting respective transverse profiles, of which one, at least partly, is substantially a negative of the other.

11. A bar (32) as claimed in Claim 10, characterized in that said first and second grooved surfaces (16a, 16b) form, longitudinally, two parts of the same grooved lateral face (7) of the bar (32).

12. A bar (32) as claimed in Claim 11, characterized in that said face (7) is defined by a depressed longitudinal surface (18) parallel to said longitudinal axis (6); at least one rib (21) parallel to said longitudinal axis (6) and projecting in relation to the depressed surface (18); and a groove (23) formed in said depressed surface (18) and parallel to said longitudinal axis (6).

13. A bar (32) as claimed in Claim 12, characterized in that said rib (21) and said groove (23) present transverse profiles, of which one is substantially a negative of the other.

14. A bar (32) as claimed in Claim 12, characterized in that said rib (21) and said groove (23) present transverse profiles, of which one is substantially a negative of the other with the exception of at least one bevel (34) formed on one of the two profiles.

15. A bar (32) as claimed in Claim 12 or 13, characterize din that said rib (21) and said groove (23) present at least one undercut (20).

16. A bar (32) as claimed in any one of the foregoing Claims from 12 to 15, characterized in that said first and second grooved surfaces (16a, 16b) respectively present a first and second grooved surface portion (31), of which one is substantially a negative of the other; on said face (7), said first and second grooved surface portions (31) being at least partly offset transversely in relation to said longitudinal axis (6).

17. A bar (32) as claimed in Claim 16, characterized in that said first and second grooved surface portions (31) present respective reference planes (30) coincident with each other, parallel to said longitudinal axis (6), and perpendicular to said depressed surface (18); each reference plane (30) being a plane of symmetry for the relative said grooved surface portion (31); and said rib (21) and said groove (23) being arranged symmetrically in relation to the respective said reference planes (30).

18. A bar (32) as claimed in Claim 16 or 17, characterized in that each said grooved surface portion (31) presents a further longitudinal groove (24) presenting a further axis located in said respective reference plane (30).

19. A bar (32) as claimed in any one of the foregoing Claims from 11 to 18, characterized in that it presents a further face (8) parallel to said longitudinal axis (6) and opposite said grooved face (7).

20. A bar (32) as claimed in Claim 19, characterized in that said further face (8) is a flat face.

21. A bar (32) as claimed in Claim 19 or 20, characterized in that it presents through holes (29) perpendicular to said longitudinal axis (6) and extending between said two faces (7, 8).

22. A bar (32) as claimed in Claims 18 and 21, characterized in that said holes (29) are formed in said further groove (24).
